# EUROPEAN PATENT SPECIFICATION

(11) **EP 1 972 496 B1**
(45) Date of publication and mention of the grant of the patent: **04.07.2012**
(21) Application number: 08003199.0
(22) Date of filing: 21.02.2008
(51) Int. Cl.: B60R 1/00, H04N 7/18, G06T 3/00, G01S 15/93

(54) **Vehicle outside display system and display control apparatus**
System und Steuerungsverfahren zur Fahrzeugumgebungsanzeige
Système d'affichage externe de véhicule et appareil de contrôle d'affichage

(30) Priority: 22.03.2007 JP 2007074796
(43) Date of publication of application: 24.09.2008
(73) Proprietor: DENSO CORPORATION, Kariya-city, Aichi-pref. 448-8661 (JP)
(72) Inventor: Matsumoto, Muneaki, Kariya-city Aichi-pref. 448-8661 (JP); Sato, Yoshihisa, Kariya-city Aichi-pref. 448-8661 (JP); Shimizu, Hiroaki, Kariya-city Aichi-pref. 448-8661 (JP)
(74) Representative: Kuhnen & Wacker

(56) References cited:
- JP-A- 2001 063 500
- JP-A- 2006 270 267
- US-A1- 2004 212 676
- US-A1- 2005 231 341
- US-A1- 2006 044 160

## Description

### FIELD OF THE INVENTION

The present invention relates to a vehicle outside display system for photographing and displaying outside a vehicle for users and a display control apparatus using the vehicle outside display system.

### BACKGROUND OF THE INVENTION

The technology as described in Patent Document 1 uses sets of a camera and an obstacle sensor. One camera partially photographs the circumference of a vehicle. One obstacle sensor detects an obstacle in that part. When any of the obstacle sensors detects an obstacle, the camera paired with the obstacle sensor photographs an image. The technology controls modes of displaying the photographed image for users.

However, the above-mentioned invention necessitates as many cameras as obstacle sensors. Each camera's photographing area needs to match a detection area of the obstacle sensor.
- Patent Document 1: JP-2006-270267 A

A vehicle outside display apparatus with the features of the pre-amble of claim 1 is known from JP-A-2001 063 500.

### SUMMARY OF THE INVENTION

The present invention has been made in consideration of the foregoing. It is therefore an object of the present invention to provide a simpler camera construction than prior arts in a technology that controls modes of displaying images photographed by a vehicle-mounted camera for users.

According to a first example of the present invention, a vehicle outside display system for a vehicle is provided as follows. A camera is included to photograph an photograph area outside the vehicle and output a photographed image as a photograph result. A first obstacle sensor is included to detect an obstacle in a first detection area included in the photograph area. A second obstacle sensor is included to detect an obstacle in a second detection area included in the photograph area and different from the first detection area. An image display apparatus is included to display an image. A display control apparatus is included to apply a process to the photographed image outputted from the camera to thereby generate a processed image after the process and display the processed image on the image display apparatus. Here, the display control apparatus, during the process, generates the processed image by clipping, from the photographed image, (i) a first partial image containing the first detection area based on detection of an obstacle by the first obstacle sensor and (ii) a second partial image, different from the first partial image, containing the second detection area based on detection of an obstacle by the second obstacle sensor.

According to a second example of the present invention, a display control apparatus for a vehicle is provided as follows. A signal exchanging unit is configured to exchange signals with (i) a camera for photographing a photograph area outside the vehicle, (ii) a first obstacle sensor for detecting an obstacle in a first detection area contained in the photograph area, (iii) a second obstacle sensor for detecting an obstacle in a second detection area, different from the first detection area, contained in the photograph area, and (iv) an image display apparatus for displaying an image. A processing unit is configured to apply a process to the photographed image outputted from the camera to thereby generate a processed image after the process, and allow the image display apparatus to display the processed image. Here, the processing unit, during the process, generates the processed image by clipping, from the photographed image, (i) a first partial image containing the first detection area based on a fact that the first obstacle sensor detects an obstacle and (ii) a second partial image, different from the first partial image, containing the second detection area based on a fact that the second obstacle sensor detects an obstacle.

### BRIEF DESCRIPTION OF THE DRAWINGS

The above and other objects, features, and advantages of the present invention will become more apparent from the following detailed description made with reference to the accompanying drawings. In the drawings:
FIG. 1 schematically shows a construction of a vehicle outside display system mounted on a vehicle according to an embodiment of the present invention;
FIG. 2 shows detection axes in a photographed image captured by a camera;
FIG. 3 is a flow chart for a process performed by a camera ECU;
FIG. 4 is a flow chart for a process performed by a sonar ECU;
FIG. 5 shows a wide-angle image superimposed with an obstacle mark at an obstacle;
FIG. 6 shows a bird's-eye image superimposed with an obstacle mark at an obstacle;
FIG. 7 shows a clip range in the photographed image;
FIG. 8 shows a clipped image used as a display image;
FIG. 9 shows a clip range of the photographed image when two obstacles are detected;
FIG. 10 shows another display example when two obstacles are detected; and
FIG. 11 shows yet another display example when two obstacles are detected.

### DETAILED DESCRIPTION OF THE PREFERRED EMBODIMENTS

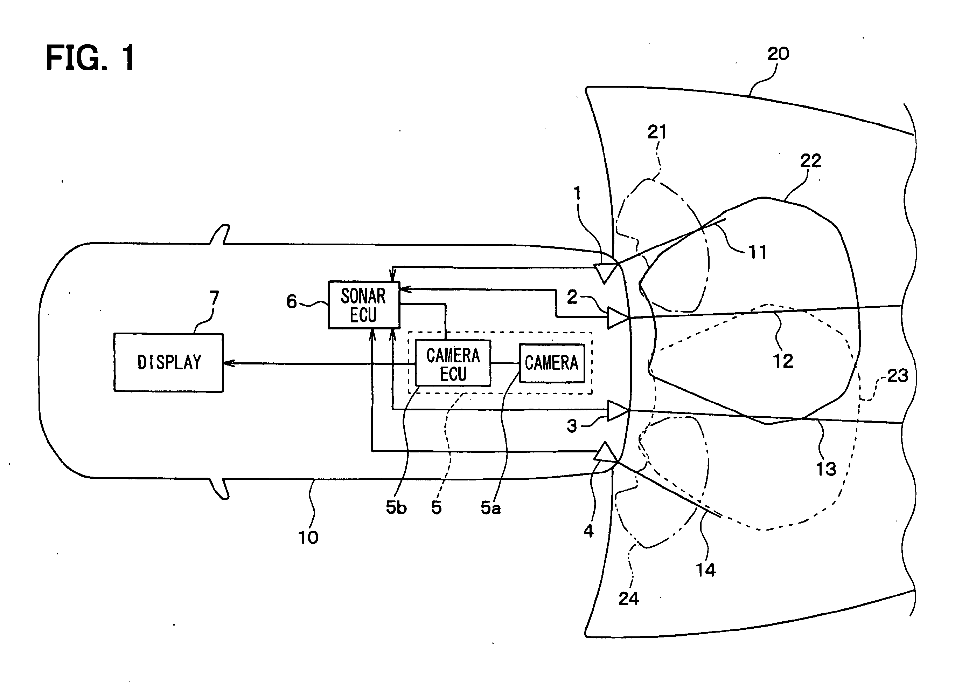

The following describes an embodiment of the present invention. FIG. 1 schematically shows a construction of a vehicle outside display system according to the embodiment mounted in a vehicle 10. The vehicle outside display system includes obstacle sensors 1 through 4, a rear photographing device 5, a sonar ECU 6, and a display 7. Here, ECU is referred to as an electronic control unit.

The obstacle sensors 1 through 4 function as sonars. The obstacle sensor transmits a sonic wave and detects a reflected wave of the sonic wave. The obstacle sensor periodically (e.g., every 0.1 seconds) measure a distance from itself to an obstacle based on a time difference between a transmission time of the sonic wave and a detection time of the reflected wave. The obstacle sensor outputs the measured distance to the sonar ECU 6. The obstacle sensors 1 through 4 are mounted at different positions in the vehicle 10 so as to provide different areas capable of detecting obstacles.

Specifically, the obstacle sensor 1 is attached to a right rear end of the vehicle 10. The obstacle sensor 1 detects (i) an obstacle within a detection area 21 near the right rear end of the vehicle 10 and (ii) a distance from itself to the obstacle, i.e., a distance from the right rear end of the vehicle 10 to the obstacle.

The obstacle sensor 2 is attached slightly to the right of a center rear end of the vehicle 10. The obstacle sensor 2 detects (i) an obstacle within a detection area 22 rearward of (or behind) the attachment position and (ii) a distance from itself to the obstacle, i.e., a distance from the rear end of the vehicle 10 to the obstacle.

The obstacle sensor 3 is attached slightly to the left of the center rear end of the vehicle 10. The obstacle sensor 3 detects (i) an obstacle within a detection area 23 rearward of the attachment position and (ii) a distance from itself to the obstacle, i.e., a distance from the rear end of the vehicle 10 to the obstacle.

The obstacle sensor 4 is attached slightly to the left rear end of the vehicle 10. The obstacle sensor 3 detects (i) an obstacle within a detection area 24 near the left rear end of the attachment position and (ii) a distance from itself to the obstacle, i.e., a distance from the left rear end of the vehicle 10 to the obstacle.

Accordingly, the obstacle sensors 1 through 4 are arranged in this order from the right rear end to the left rear end of the vehicle 10. The detection areas 21 through 24 are arranged in this order from near the right rear to near the left rear of the vehicle 10. The sum of the detection areas for the obstacle sensors 1 through 4 almost entirely covers a horizontal angle of view of a camera 5a , i.e., an angle in left and right directions of a photograph area 20 of the camera 5a. The detection areas 21 and 22, 22 and 23, and 23 and 24 partially overlap with each other.

The detection axes 11 through 14 are lines passing through centers of the detection areas 21 through 24 and the corresponding obstacle sensors 1 through 4, respectively. The detection axes 11 through 14 also connect centers of the detection areas 21 through 24 in left and right directions.

The display 7 (or image display apparatus) receives an image signal from the rear photographing device 5 and displays an image represented by the signal for a user.

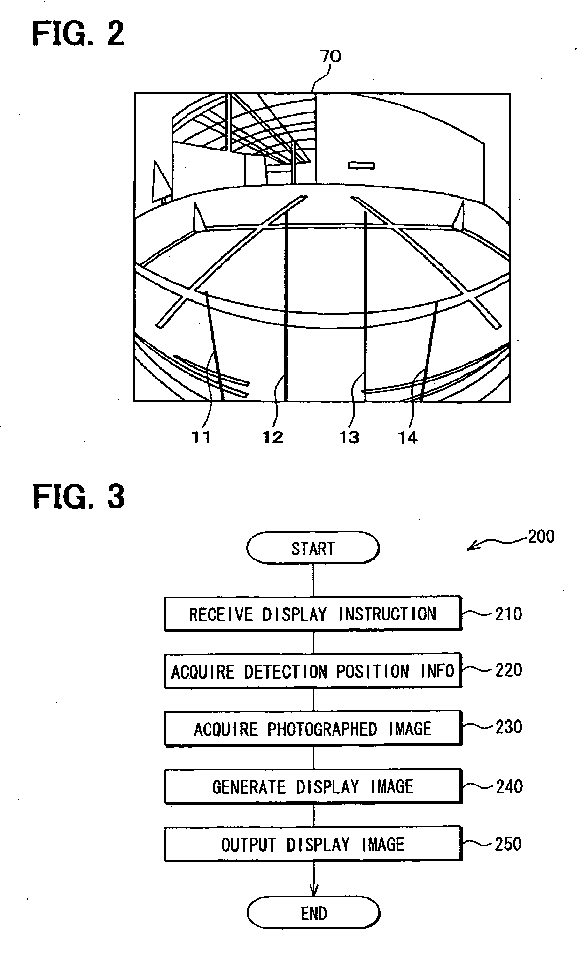

The rear photographing device 5 includes the camera 5a and a camera ECU 5b. The camera 5a is attached to the rear end of the vehicle 10. The camera 5a photographs (or captures an image of) an area rearward of (or behind) the vehicle 10 repeatedly (e.g., at an interval of 0.1 seconds) at a wide angle. The camera 5a outputs a photographed image as a photograph result to the camera ECU 5b. The photograph area 20 includes the detection axes 11 through 14. The field angle is greater than or equal to 120 degrees. One end of the photograph area 20 may contain the rear end of the vehicle 10. FIG. 2 exemplifies a photographed image 70 outputted from the camera 5a. The upward direction in the photographed image 70 represents a direction apart from the vehicle 10. Left and right directions correspond to those viewed from the vehicle 10. Four vertical lines in the photographed image 70 virtually represent the detection axes 11 through 14. The output photographed image 70 does not actually represent these detection axes 11 through 14.

The camera ECU 5b may or may not process the photographed image received from the camera 5a. The camera ECU 5b displays the processed or unprocessed photographed image as a display image on the display 7. A signal from the sonar ECU 6 controls contents of the image process.

FIG. 3 shows a flow chart showing a process 200 repeatedly performed by the camera ECU 5b (e.g., at a photograph time interval of the camera 5a). The camera ECU 5b may be embodied as a microcomputer for reading and performing the process 200 or as a special electronic circuit having a circuit configuration for performing the process 200.

At Processing 210 of the process 200, the camera ECU 5b receives an image display instruction. The image display instruction may correspond to a signal outputted from an operation apparatus (not shown) in accordance with a specified user operation on the operation apparatus. The image display instruction may represent a signal from a sensor for detecting a drive position of the vehicle 10. In this case, the signal indicates that the drive position is set to reverse. The image display instruction may represent any signal outputted from any source.

At Processing 220, the camera ECU 5b acquires detection position information about an obstacle from the sonar ECU 6. The detection position information outputted from the sonar ECU 6 will be described later in detail. At Processing 230, the camera ECU 5b incorporates the photographed image outputted from the camera 5a.

At Processing 240, the camera ECU 5b may or may not process the photographed image to generate a display image. At Processing 250, the camera ECU 5b outputs the generated display image to the display 7. The camera ECU 5b follows a display instruction from the sonar ECU 6 (to be described) to determine whether or not to process the photographed image at Processing 240.

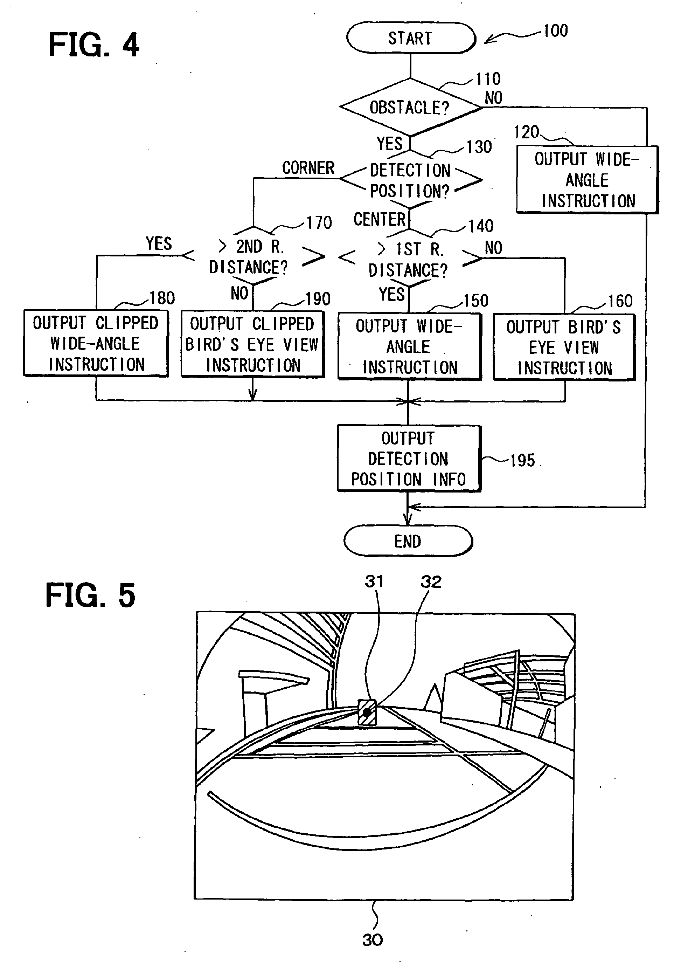

The sonar ECU 6 repeats a process 100 in FIG. 4 so as to output the detection position information about the obstacle and a display instruction to the camera ECU 5b based on signals outputted from the obstacle sensors 1 through 4. The sonar ECU 6 may be embodied as a microcomputer for reading and performing the process 100 or as a special electronic circuit having a circuit configuration for performing the process 100. Yet further, the sonar ECU 6 may be embodied as being integrated into the camera ECU 5b.

At Processing 110 of the process 100, the sonar ECU 6 determines whether or not there is an obstacle. The sonar ECU 6 determines whether or not to receive the detection signal from any of the obstacle sensors 1 through 4. When the signal is received, the sonar ECU 6 proceeds to Processing 130. When no signal is received, the sonar ECU 6 proceeds to Processing 120.

At Processing 120, the sonar ECU 6 outputs a wide-angle image display instruction to the camera ECU 5b and then terminates one sequence of the process 100. The camera ECU 5b may receive the wide-angle image display instruction and does not receive the detection position information. At Processing 240 of the process 200, the camera ECU 5b generates a display image by clipping, from the wide-angle photographed image, a portion equivalent to a field angle (e.g., 120 degrees at the center) causing little image distortion.

At Processing 130, the sonar ECU 6 determines whether or not a detection position is the center or a corner. When the obstacle sensor 2 or 3 outputs the detection signal, the sonar ECU 6 determines the position to be the center and proceeds to Processing 140. When the obstacle sensor 1 or 4 outputs the detection signal, the sonar ECU 6 determines the position to be the corner and proceeds to Processing 170.

The received detection signal contains information about the distance. At Processing 140, based on this information, the sonar ECU 6 determines whether or not the distance (from the rear end of the vehicle 10 to the obstacle) is greater than a first reference distance. The first reference distance may be predetermined (e.g., three meters), may vary with conditions (e.g., increased in accordance with an increase in the vehicle speed), or may be randomized within a specified range. When the distance is greater than the first reference distance, the sonar ECU 6 proceeds to Processing 150. When the distance is smaller than or equal to the first reference distance, the sonar ECU 6 proceeds to Processing 160.

At Processing 150, similarly to Processing 120, the sonar ECU 6 outputs the wide-angle image display instruction to the camera ECU 5b. At Processing 195, the sonar ECU 6 outputs the detection position information to the camera ECU 5b. This detection position information contains information about the distance contained in the detection signal and information for specifying the obstacle sensor that detects the obstacle. The sonar ECU 6 then terminates one sequence of the process 100.

The camera ECU 5b receives the detection position information along with the wide-angle image display instruction. At Processing 240 of the process 200, the camera ECU 5b generates a display image. This is equivalent to a processed image as a result of superimposing an obstacle mark on an estimated obstacle position in the wide-angle photographed image. FIG. 5 exemplifies an image in which an obstacle mark is superimposed on a wide-angle photographed image. An obstacle mark 32 is superimposed on an obstacle 31 detected by the obstacle sensor 3.

The estimated obstacle position of the detected obstacle is defined as a point on the detection axis corresponding to the obstacle sensor that detected the obstacle. More specifically, the estimated obstacle position exists on the detection axis and is away from the rear end of the vehicle 10 for a distance detected for the obstacle. A position on the detection axis corresponds to a distance from the rear end of the vehicle 10. The correspondence relationship is predetermined according to photograph characteristics such as an angle for mounting the camera 5a when the vehicle outside display system is mounted in the vehicle 10. The correspondence relationship is recorded in a recording medium of the sonar ECU 6, for example.

At Processing 160, the sonar ECU 6 outputs a bird's-eye image display instruction to the camera ECU 5b. The sonar ECU 6 performs Processing 195 as mentioned above and terminates one sequence of the process 100.

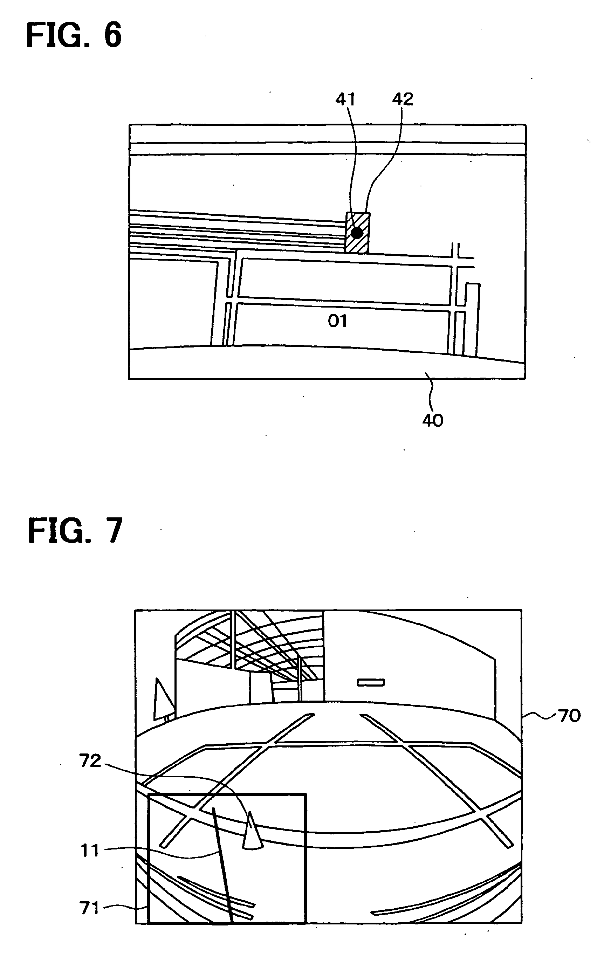

The camera ECU 5b has received the detection position information along with the bird's-eye image display instruction. At Processing 240 of the process 200, the camera ECU 5b performs a bird's-eye view transformation on a wide-angle photographed image. The camera ECU 5b superimposes an obstacle mark on the estimated obstacle position in the generated bird's-eye view as a result of the bird's-eye view transformation. The camera ECU 5b generates a display image using the resulting processed image. FIG. 6 shows an example of an image in which the obstacle mark is superimposed on a bird's-eye view. A bird's-eye image 40 contains an obstacle mark 42 superimposed on an obstacle 41 detected by the obstacle sensor 3.

The bird's-eye view transformation will be described. The viewpoint transformation of an image uses a known technology such as affine transformation to transform an image photographed at a given viewpoint into an image that can be viewed from another viewpoint. The bird's-eye view transformation is an example of the viewpoint transformation. It transforms an image photographed near the ground therefrom into an image that can be viewed from a higher position. Such technology is already known (e.g., see JP-2003-264835 A corresponding to US2002/0181790A1). According to the embodiment, decreasing the distance contained in the detection position information received from the sonar ECU 6 increases a viewpoint height in the bird's-eye view transformation.

The bird's-eye view transformation generates an estimated obstacle position in the bird's-eye view as follows. It is assumed that an obstacle is positioned on the detection axis zero meters above the ground and is away from the rear end of the vehicle 10 for a distance detected about the obstacle. The bird's-eye view transformation is performed on that position to acquire a coordinate position that equals the estimated obstacle position.

Processing 170 is performed when the obstacle sensor 1 or 4 detects an obstacle. At Processing 170, the sonar ECU 6 uses the distance information contained in the received detection signal to determine whether or not the distance (from the rear end of the vehicle 10 to the obstacle) is greater than a second reference distance. The second reference distance may be predetermined (e.g., two meters), may vary with conditions (e.g., increased in accordance with an increase in the vehicle speed), or may be randomized within a specified range. When the distance is greater than the second reference distance, the sonar ECU 6 proceeds to Processing 180. When the distance is less than or equal to the second reference distance, the sonar ECU 6 proceeds to Processing 190.

At Processing 180, the sonar ECU 6 outputs a clipped wide-angle image display instruction to the camera ECU 5b. The sonar ECU 6 performs Processing 195 as mentioned above and terminates one sequence of the process 100. The camera ECU 5b has received the detection position information along with the bird's-eye image display instruction. At Processing 240 of the process 200, the camera ECU 5b clips part of the wide-angle photographed image. The clipped part exemplifies a first or second partial image. The obstacle mark is superimposed on the estimated obstacle position in the clipped image as a clip result. The resulting processed image is used as a display image. The method of superimposing the obstacle mark on the estimated obstacle position is the same as that used at Processing 150 of the process for the camera ECU 5b.

The clipping method will be described with reference to FIG. 7. A clip range 71 in the photographed image 70 covers a clipped image and is a rectangular range having the same aspect ratio as that of the photographed image 70. The clip range 71 centers around the detection axis corresponding to the obstacle sensor that detected the obstacle. The bottom of the clip range 71 corresponds to that of the photographed image 70. The top of the clip range 71 is configured so that the estimated obstacle position corresponding to the distance detected for the obstacle is located at a specific position in an upper half of the clip range 71. For example, the specific position may be located one quarter of the entire clip range 71 below its top. The clipped image becomes smaller as a distance to the detected obstacle decreases. An actual size of the image display range on the display 7 is independent of the clipped image size. Reducing a clipped image is equivalent to increasing an enlargement factor of the display image to the photographed image.

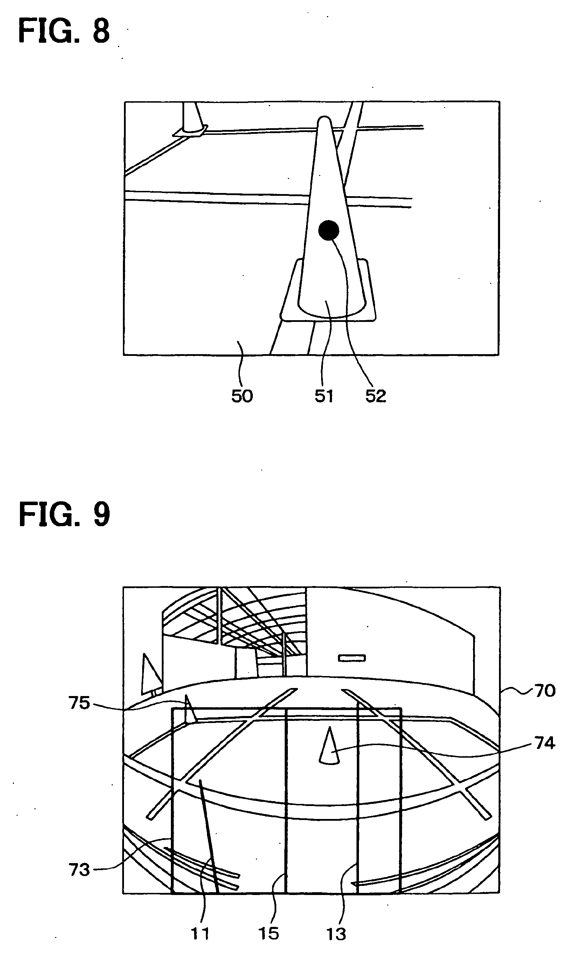

For example, FIG. 8 shows a clipped image 50 used as the display image at Processing 180 of the process for the camera ECU 5b. An obstacle mark 52 is superimposed on an obstacle 51.

At Processing 190, the sonar ECU 6 outputs a clipped bird's-eye image display instruction to the camera ECU 5b. The sonar ECU 6 performs Processing 195 as mentioned above and terminates one sequence of the process 100.

The camera ECU 5b has received the detection position information along with the clipped bird's-eye image display instruction. At Processing 240 of the process 200, the camera ECU 5b clips part of the wide-angle photographed image. The part is equivalent to an example of a first or second partial image. The camera ECU 5b performs the bird's-eye view transformation on the clipped image as a clip result. The camera ECU 5b superimposes the obstacle mark at the estimated obstacle position in the bird's-eye view generated as a result of the bird's-eye view transformation. The camera ECU 5b generates a display image using the resulting processed image. The clip method is the same as that at Processing 180 in the process for the camera ECU 5b. The bird's-eye view transformation and the clip methods are the same as those at Processing 160 and Processing 195 in the process for the camera ECU 5b.

Thus, the sonar ECU 6 outputs the detection position information and the display instruction by repeatedly performing the above-mentioned process 100. Based on the information and the instruction, the camera ECU 5b performs as follows. The obstacle sensors 1 and 4 may detect an obstacle from any of them (corresponding to Processing 110 and Processing 130). In such a case, a distance to the obstacle may be greater than the second reference distance (corresponding to Processing 170). The camera ECU 5b partially clips the photographed image supplied from the camera 5a (corresponding to Processing 180). The clipped portion is centered around the detection axis corresponding to the obstacle sensor that detects the obstacle. The detection position of the obstacle is superimposed on the clipped image (corresponding to Processing 195). The camera ECU 5b outputs the image to the display 7 without performing the viewpoint transformation. In contrast, the distance to the obstacle may be less than the second reference distance (corresponding to Processing 170). From the photographed image supplied from the camera 5a, the camera ECU 5b clips a portion centered around the detection axis corresponding to the obstacle sensor that detected the obstacle. In addition, the camera ECU 5b performs the bird's-eye view transformation on the clipped image (corresponding to Processing 190). The camera ECU 5b superimposes the detection position of the obstacle on the clipped image (corresponding to Processing 195) and outputs the superimposed image to the display 7.

Further, the obstacle sensors 2 and 3 may detect an obstacle from any of them (corresponding to Processing 110 and Processing 130). In such a case, a distance to the obstacle may be greater than the first reference distance (corresponding to Processing 140). The camera ECU 5b avoids the bird's-eye image transformation for the wide-angle photographed image outputted from the camera 5a (corresponding to Processing 150). The camera ECU 5b superimposes the detection position of the obstacle on the wide-angle photographed image (corresponding to Processing 195) and outputs the superimposed image to the display 7. In contrast, the distance to the obstacle may be less than the first reference distance (corresponding to Processing 140). The camera ECU 5b performs the bird's-eye view transformation on a photographed image from the camera 5a corresponding to the obstacle sensor that detected the obstacle (corresponding to Processing 160). The camera ECU 5b superimposes the detection position of the obstacle on the image processed by the bird's-eye view transformation (corresponding to Processing 195). The camera ECU 5b outputs the superimposed image to the display 7.

None of the obstacle sensors 1 through 4 may detect an obstacle (corresponding to Processing 110). In such a case, the camera ECU 5b clips a portion, which is equivalent to a field angle (e.g., 120 degrees at the center) causing little image distortion, from the wide-angle photographed image outputted from the camera 5a. The camera ECU 5b outputs the clipped image to the display 7 (corresponding to Processing 120). The user can clearly recognize that none of the obstacle sensors 1 through 4 detects an obstacle.

In this manner, one camera's photograph area covers detection areas for the obstacle sensors 1 through 4. There is no need for using cameras in accordance with the number of obstacle sensors. Further, if multiple cameras are used, each camera's photograph area need to be adjusted to the obstacle sensor's detection area. Accordingly, the vehicle outside display system can provide a simpler camera construction than prior arts.

Out of the photographed image supplied from the camera 5a, the camera ECU 5b clips portions corresponding to detection areas of the obstacle sensors 1 and 4 that detected obstacles. Accordingly, the relationship between the photographed image from the camera 5a and the display image provided for the user can reflect the obstacle sensor that detected the obstacle. As a result, the user can be effectively notified of an obstacle.

No image is clipped from the photographed image supplied from the camera 5a when the obstacle sensor 2 or 3 detects an obstacle. When an image is clipped in such a case, both left and right rear ends of the vehicle 10 disappear from the display image on the display 7. The left and right rear ends of the vehicle 10 are often invisible directly from a driver and may need to be displayed on the display 7.

The end of the vehicle 10 is contained in the end of the photograph area of the camera 5a. During the image process, the camera ECU 5b may generate a clipped image (equivalent to an example of the first partial image) so that its end always contains the vehicle end. Since the displayed image contains the end of the vehicle 10, the user can easily visually recognize a distance between the detected obstacle and the vehicle 10.

During the image process, the camera ECU 5b clips an image so that an aspect ratio (equivalent to an outer shape example) of the clipped image equals that of the photographed image. The user can be free from visually uncomfortable feeling in clipping.

During the image process, the camera ECU 5b clips an image so that the clipped image is horizontally centered around the detection axis of the obstacle sensor that detected the obstacle. The clipped image can more appropriately represent a detection area for the obstacle sensor.

During the image process, the camera ECU 5b may clip an image so that an upper half (a half further from the vehicle 10) of the clipped image contains a position in the photographed image equivalently to a distance detected by the obstacle sensor from the vehicle.

The user can recognize an obstacle in the clipped and displayed image. Since the obstacle is located in the upper half of the displayed image, a large part of the display area can be allocated to a space between the obstacle and the vehicle.

The camera ECU 5b applies the bird's-eye view transformation to a clipped image during the image process so that a depression angle in the bird's-eye view transformation increases as a distance from the vehicle detected by the obstacle sensor shortens.

As the obstacle approaches the vehicle 10, the image is displayed as if it were looked down upon from above. The display image changes so as to easily recognize the relationship between an obstacle and the vehicle 10 as the obstacle approaches the vehicle 10 to increase danger of a contact between both.

During the image process, the camera ECU 5b increases a ratio of the clipped image to the photographed image as a distance from the vehicle detected by the obstacle sensor shortens. This decreases a degree at which the position of an obstacle in the image varies with the distance between the vehicle 10 and the obstacle. Consequently, the obstacle on the display 7 remains to be easily visible.

Since the display 7 displays the display image superimposed with the obstacle mark, the user can be fully aware of the obstacle.

According to the embodiment, one of the obstacle sensors 1 and 4 is equivalent to an example of a first obstacle sensor and the other to an example of a second obstacle sensor. The camera ECU 5b and the sonar ECU 6 are equivalent to an example of a display control apparatus. Further, the combination of the camera ECU 5b and the sonar ECU 6 function as (i) a signal exchanging means or unit to exchange signals with the camera 5a and the obstacle sensors 1 to 4 and (ii) a processing unit to apply a process to the photographed image outputted from the camera and to allow the display 7 to display the processed image. The signal exchanging unit is exemplified by Processing 110 of the process 100, Processing 250 of the process 200. The processing unit is exemplified by Processing 120 to 190 of the process 100 and Processing 230, 240 of the process 200.

### (Other embodiments)

While there has been described the specific preferred embodiment of the present invention, it is to be distinctly understood that the present invention is not limited thereto but may include various modes capable of embodying the functions specific to the invention.

For example, the vehicle outside display system according to the embodiment includes the four obstacle sensors. The vehicle outside display system may include five or more obstacle sensors, only two obstacle sensors, or only three obstacle sensors.

When the obstacle sensors 2 and 3 detect obstacles, the vehicle outside display system may allow the display 7 to display a clipped image (or further processed by the bird's-eye view transformation) as a result of clipping the photographed image in the same manner that the obstacle sensors 1 and 4 detect obstacles. For example, the sonar ECU 6 may be configured to perform Processing 170 immediately after the determination at Processing 110 of the process 100 yields an affirmative result. In this case, any two pairs of the obstacle sensors 1 through 4 can function as the first and second obstacle sensors.

For example, two obstacle sensors may simultaneously detect different obstacles. The obstacle sensors 1 and 3 simultaneously are assumed to detect obstacles 75 and 74, respectively. As shown in FIG. 9, the center line of a clip range 73 (equivalent to an example of a range of a third partial image) may be located at a position 15 equally distant from detection axes 11 and 13 in a horizontal direction. In this manner, multiple obstacles, when detected, are highly possibly contained at the same time. The detection areas 21 and 23 for the obstacle sensors 1 and 3 can be positioned in a display image so that the user can more easily view them.

To position the top of the clip range 73, let us consider an estimated obstacle position corresponding to one of the obstacles 74 and 75 (the obstacle 74 in FIG. 9) detected to be nearer to the vehicle. The top may be configured so that the estimated obstacle position can be located at a specific position in an upper half of the clip range 73, e.g., located one quarter of the entire clip range 73 below its top.

Even when multiple obstacles are detected, the clip range is adjusted so that the user can easily confirm an obstacle nearer to the vehicle. Further, the clip range is adjusted so as to be able to allocate a large portion of a range for displaying the display image to a space between the vehicle and the obstacle nearer to it. The user can more appropriately recognize an obstacle that is more highly possibly contacted or collided.

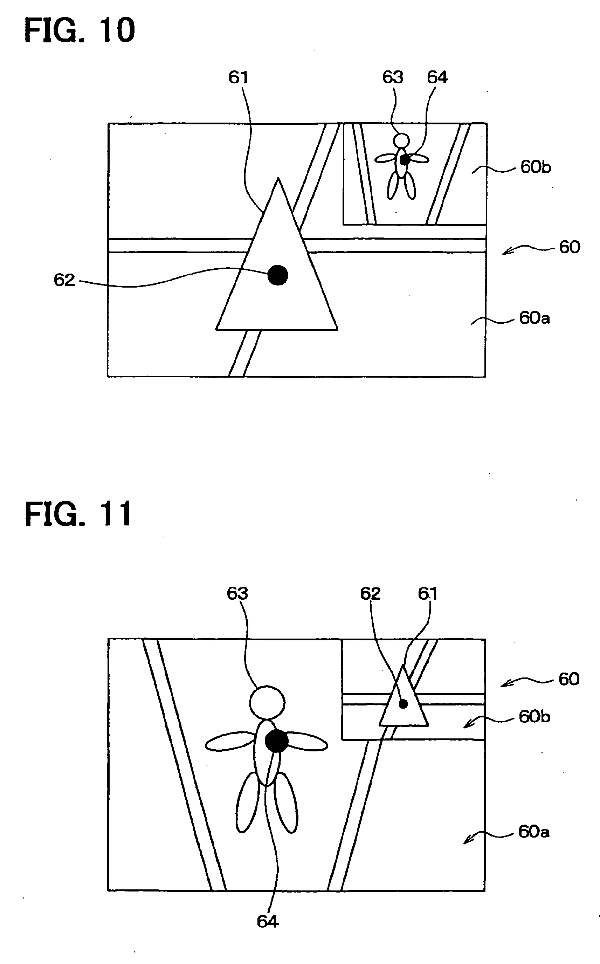

For example, two obstacle sensors may simultaneously detect different obstacles. As shown in FIG. 10, the camera ECU 5b divides a display image 60 into two areas, i.e., a main display area 60a and a sub display area 60b narrower than the main display area 60a. The main display area 60a may display a clipped image corresponding to an obstacle 61 indicating a shorter distance detected. The sub display area 60b may display a clipped image corresponding to an obstacle 63 indicating a longer distance detected. Obstacle marks 62 and 64 are also superimposed on these areas.

The user may operate an operation apparatus (not shown) in accordance with a specified instruction. As shown in FIG. 11, display contents may be switched between the main display area 60a and the sub display area 60b. The user can change the view of the obstacle he or she wants to display larger.

The obstacle sensor does not always need to be a sonar. The obstacle sensor can be an apparatus that detects an obstacle in a specified range. For example, the obstacle sensor may be a laser radar sensor or an apparatus that recognizes obstacles using an image recognition technology. The obstacle sensor does not necessarily have the function to specify a distance to the obstacle. That is, the obstacle sensor just needs to be able to specify obstacles.

According to the embodiment, the obstacle sensor does not specify a horizontal position of the obstacle in the detection area but may specify it. When the obstacle sensor can specify the horizontal position, the camera ECU 5b may generate a clipped image so that the clipped image causes its horizontal center to locate a horizontal position of the obstacle detected by the obstacle sensor. The clipped and displayed image can more appropriately represent the detection area for the obstacle sensor.

None of the obstacle sensors 1 through 4 may detect an obstacle. That is, all the obstacle sensors in the vehicle outside display system may detect no obstacles. In such a case, the camera ECU 5b according to the embodiment generates a display image to be output to the display 7 by clipping a portion equivalent to a field angle (e.g., 120 degrees at the center) causing little image distortion from a wide-angle image outputted from the camera 5a. However, the invention is not limited thereto. The display 7 may output an image by processing the image (e.g., superimposing descriptive information) so as not to change the range of the display target and the viewpoint for it. When none of the obstacle sensors 1 through 4 detects an obstacle, the display 7 may output a display image having the same range of a display target and the same viewpoint for it as those of the photographed image.

When none of the obstacle sensors 1 through 4 may detect an obstacle as mentioned above, the camera ECU 5b according to the embodiment may allow the display 7 to output a wide-angle image outputted from the camera 5a without change.

The obstacle sensor may be able to detect obstacles not only in the first detection area photographed by the camera but also in the other areas. When the obstacle sensor can detect obstacles at least in the first detection area photographed by the camera, the obstacle sensor may or may not detect obstacles in the other areas. In addition, the display may include the function of the ECU 5b.

Each or any combination of processing, steps, or means explained in the above can be achieved as a software unit (e.g., subroutine) and/or a hardware unit (e.g., circuit or integrated circuit), including or not including a function of a related device; furthermore, the hardware unit can be constructed inside of a microcomputer.

Furthermore, the software unit or any combinations of multiple software units can be included in a software program, which can be contained in a computer-readable storage media or can be downloaded and installed in a computer via a communications network.

### (Aspects)

Aspects of the disclosure described herein are set out in the following clauses.

As an aspect, in a vehicle outside display system, a single camera's photograph area covers several detection areas for several obstacle sensors. If multiple cameras are used, each camera's photograph area need to be adjusted to the obstacle sensor's detection area. According to the aspect, there is no need for using several cameras in accordance with the number of obstacle sensors. Accordingly, the vehicle outside display system can provide a simpler camera construction than prior arts.

Out of the photographed image, the system clips portions corresponding to detection areas of the obstacle sensors that detected obstacles. Accordingly, the relationship between the photographed image from the camera and the display image provided for the user can reflect the obstacle sensor that detected the obstacle. As a result, the user can be effectively notified of an obstacle.

Throughout this specification, including an area signifies including part or all of the area.

The aspect produces its effect if a camera ensures a horizontal field angle greater than or equal to 120 degrees in a photograph area.

The display control apparatus may allow an image display apparatus to display a display image having the same viewpoint for a display target as that of the photographed image based on fact that neither the first obstacle sensor nor the second obstacle sensor detects an obstacle. The user can clearly recognize that none of the obstacle sensors detects an obstacle. In this context, "same viewpoint" also signifies visual similarities that seem to be the same for an observer.

An end of the photograph area may include a vehicle end. During a process, the display control apparatus may clip a first partial image so that its end includes the vehicle end. Since the displayed image includes the end of the vehicle, the user can easily visually recognize a distance between the obstacle and the vehicle.

During the process, the display control apparatus may clip an outer shape of the first partial image so that it is similar to an outer shape of the photographed image. The user can be free from visually uncomfortable feeling in clipping.

During the process, the display control apparatus may clip the first partial image so that its horizontal center corresponds to a horizontal center of the first detection area. The clipped and displayed image can more appropriately represent the detection area for the obstacle sensor.

The first obstacle sensor may detect a distance from the vehicle to an obstacle in the first detection area.

When a distance to the obstacle can be detected, the display control apparatus, during the process, may clip the first partial image so that its upper half includes a position in the photographed image equivalent to a distance detected by the first obstacle sensor from the vehicle. The "upper half' here is based on a vertical direction displayed on the image display apparatus.

The user can recognize an obstacle in the clipped and displayed image. Since the obstacle is located in the upper half of the displayed image, a large part of the display area can be allocated to a space between the obstacle and the vehicle.

When a distance to the obstacle can be detected, the display control apparatus, during the process, may generate the processed image by processing the first clipped partial image in accordance with a method that varies with a distance from the vehicle detected by the first obstacle sensor.

The user can view an image whose display mode varies with a distance to the obstacle. Accordingly, the user can more easily recognize the distance to the obstacle and receive displays in a mode appropriate to the distance.

Specifically, the display control apparatus, during the process, may generate the processed image by transforming the first clipped partial image into a bird's-eye view. The display control apparatus may increase a depression angle in the bird's-eye view as a distance detected by the first obstacle sensor from the vehicle decreases.

As the obstacle approaches the vehicle, the image is displayed as if it were looked down upon from above. The display image changes so as to easily recognize the relationship between an obstacle and the vehicle as the obstacle approaches the vehicle to increase danger of a contact between both.

During the process, the display control apparatus may generate the processed image by clipping a third partial image containing the first and second detection areas from the photographed image based on a fact that the first obstacle sensor detects an obstacle and, at the same time, the second obstacle sensor detects an obstacle. When multiple obstacles are detected, they are highly possibly included in the display image.

At this time, the display control apparatus, during the process, may clip the third partial image so that its horizontal center is located horizontally equally distant from a horizontal center of the first detection area and a horizontal center of the second detection area. The detection areas can be positioned in the display image so that the user can more easily view them.

The first obstacle sensor may detect a distance from the vehicle to an obstacle in the first detection area. The second obstacle sensor may detect a distance from the vehicle to an obstacle in the second detection area. In this case, the display control apparatus, during the process, may clip the third partial image so that its upper half contains a position in the photographed image corresponding to a shorter one of a distance detected by the first obstacle sensor from the vehicle and a distance detected by the second obstacle sensor from the vehicle.

Even when multiple obstacles are detected, the clip range is adjusted so that the user can easily confirm an obstacle nearer to the vehicle. Further, the clip range is adjusted so as to be able to allocate a large portion of a range for displaying the display image to a space between the vehicle and the obstacle nearer to it. The user can more appropriately recognize an obstacle that is more highly possibly contacted.

As another aspect, in a display control apparatus, signals are exchanged with a camera for photographing a photograph area outside a vehicle, a first obstacle sensor for detecting an obstacle in a first detection area contained in the photograph area, a second obstacle sensor for detecting an obstacle in a second detection area, different from the first detection area, contained in the photograph area, and an image display apparatus for displaying an image for a user of the vehicle. This may be performed by a signal exchanging unit of the display control apparatus.

A process is then applied to the photographed image outputted from the camera; the image display apparatus is allowed to display the processed image after the process. This may be performed by a processing unit of the display control apparatus.

During the process, the processing unit of the display control apparatus generates the processed image by clipping, from the photographed image, a first partial image containing the first detection area based on a fact that the first obstacle sensor detects an obstacle and a second partial image, different from the first partial image, containing the second detection area based on a fact that the second obstacle sensor detects an obstacle.

Further in the above, the second obstacle sensor may include all functions of the first obstacle sensor. In such a case, the display control apparatus may also apply the above-mentioned processes, which are applied to the first obstacle sensor, the first detection area, and the first partial image, to the second obstacle sensor, the second detection area, and the second partial image.

It will be obvious to those skilled in the art that various changes may be made in the above-described embodiments of the present invention. However, the scope of the present invention should be determined by the following claims.

## Claims

1. A vehicle outside display system for a vehicle, the system comprising:
a camera (5a) that photographs an photograph area (20) outside the vehicle and outputs a photographed image as a photograph result;
a first obstacle sensor (1 through 4) that detects an obstacle in a first detection area (21, 22, 23, 24) included in the photograph area;
a second obstacle sensor (1 through 4) that detects an obstacle in a second detection area (21, 22, 23, 24) included in the photograph area and different from the first detection area;
an image display apparatus (7) that displays an image; and
a display control apparatus (5b, 6) that applies a process to the photographed image outputted from the camera to thereby generate a processed image after the process and displays the processed image on the image display apparatus (7),
**characterized in that**
(i) in case that the first obstacle sensor detects an obstacle in the first detection area, the display control apparatus applies the process to generate a processed image by clipping from the photographed image a first partial image representing the first detection area, thereby displaying the generated processed image as display image on the image display apparatus; or
(ii) in case that the second obstacle sensor detects an obstacle in the second detection area, the display control apparatus applies the process to generate a processed image by clipping from the photographed image a second partial image representing the second detection area, thereby displaying the generated processed image as display image on the image display apparatus, the second partial image being different from the first partial image.

2. The vehicle outside display system according to claim 1,
wherein a horizontal field angle of the photograph area is greater than or equal to 120 degrees.

3. The vehicle outside display system according to claim 1 or 2,
wherein the display control apparatus allows the image display apparatus to display a display image having a same viewpoint for a displayed range as the photographed image based on a fact that neither the first obstacle sensor nor the second obstacle sensor detects an obstacle.

4. The vehicle outside display system according to any one of claims 1 through 3,
wherein the photograph area contains, at its peripheral end, an end of the vehicle, and
wherein the display control apparatus, during the process, clips the first partial image so that its peripheral end contains the end of the vehicle.

5. The vehicle outside display system according to any one of claims 1 through 4,
wherein the display control apparatus, during the process, clips an outer shape of the first partial image so as to have an aspect ratio identical to an aspect ratio of an outer shape of the photographed image.

6. The vehicle outside display system according to any one of claims 1 through 5,
wherein the display control apparatus, during the process, clips the first partial image so that a horizontal center (11 through 13) of the first detection area is located at a horizontal center of the first partial image.

7. The vehicle outside display system according to any one of claims 1 through 6,
wherein the first obstacle sensor detects a distance from the vehicle to an obstacle in the first detection area.

8. The vehicle outside display system according to claim 7,
wherein the display control apparatus, during the process, clips the first partial image so that an upper part of the first partial image contains a position in the photographed image, the position corresponding to a distance detected by the first obstacle sensor from the vehicle.

9. The vehicle outside display system according to claim 7 or 8,
wherein the display control apparatus, during the process, generates the processed image by processing the first clipped partial image in accordance with a method that varies with a distance detected by the first obstacle sensor from the vehicle.

10. The vehicle outside display system according to claim 9,
wherein the display control apparatus, during the process, generates the processed image by transforming the first clipped partial image into a bird's-eye view and increases a downward direction angle in the bird's-eye view as a distance detected by the first obstacle sensor from the vehicle decreases.

11. The vehicle outside display system according to any one of claims 1 through 9,
wherein the display control apparatus, during the process, generates the processed image by clipping a third partial image containing the first and second detection areas from the photographed image based on a fact that the second obstacle sensor detects an obstacle simultaneously when the first obstacle sensor detects an obstacle.

12. The vehicle outside display system according to claim 11,
wherein the display control apparatus, during the process, clips the third partial image so that its horizontal center is located horizontally equally distant from a horizontal center (11 through 14) of the first detection area and a horizontal center (11 through 14) of the second detection area.

13. The vehicle outside display system according to claim 11 or 12,
wherein the first obstacle sensor detects a distance from the vehicle to an obstacle in the first detection area,
wherein the second obstacle sensor detects a distance from the vehicle to an obstacle in the second detection area, and
wherein the display control apparatus, during the process, clips the third partial image so that its upper half contains a position in the photographed image, the position corresponding to a shorter one of (i) a distance detected by the first obstacle sensor from the vehicle and (ii) a distance detected by the second obstacle sensor from the vehicle.

## Patentansprüche

1. Fahrzeug-Aussenanzeigesystem für ein Fahrzeug, wobei das System aufweist:
eine Kamera (5a), die einen fotografierten Bereich (20) außerhalb des Fahrzeugs fotografiert und ein fotografiertes Bild als ein Fotografieergebnis ausgibt;
einen ersten Hindernissensor (1 bis 4), der ein Hindernis in einem ersten Erfassungsbereich (21, 22, 23, 24), der in dem fotografierten Bereich beinhaltet ist, erfasst;
einen zweiten Hindernissensor (1 bis 4), der ein Hindernis in einem zweiten Erfassungsbereich (21, 22, 23, 24), der in dem fotografierten Bereich beinhaltet ist und sich von dem ersten Erfassungsbereich unterscheidet, erfasst;
eine Bildanzeigevorrichtung (7), die ein Bild anzeigt; und
eine Anzeigesteuerungsvorrichtung (5b, 6), die eine Verarbeitung auf das fotografierte Bild, das von der Kamera ausgegeben wird, anwendet, um **dadurch** ein verarbeitetes Bild nach der Verarbeitung zu erzeugen und das verarbeitete Bild auf der Bildanzeigevorrichtung (7) anzeigt,
**dadurch gekennzeichnet, dass**
(i) in einem Fall, in dem der erste Hindernissensor ein Hindernis in dem ersten Erfassungsbereich erfasst, die Anzeigesteuerungsvorrichtung die Verarbeitung anwendet, um ein verarbeitetes Bild zu erzeugen, indem von dem fotografierten Bild ein erstes Teilbild, das den ersten Erfassungsbereich dargestellt, abgeschnitten wird, wodurch das erzeugte verarbeitetes Bild als Anzeigebild auf der Bildanzeigevorrichtung angezeigt wird; oder
(ii) in einem Fall, in dem der zweite Hindernissensor ein Hindernis in dem zweiten Erfassungsbereich erfasst, die Anzeigesteuerungsvorrichtung die Verarbeitung anwendet, um ein verarbeitetes Bild zu erzeugen, indem von dem fotografierten Bild ein zweites Teilbild, das den zweiten Erfassungsbereich dargestellt, abgeschnitten wird, wodurch das erzeugte verarbeitetes Bild als Anzeigebild auf der Bildanzeigevorrichtung angezeigt wird, wobei das zweite Teilbild sich von dem ersten Teilbild unterscheidet.

2. Fahrzeug-Aussenanzeigesystem nach Anspruch 1,
wobei ein horizontaler Feldwinkel des fotografierten Bereichs größer als oder gleich 120 Grad ist.

3. Fahrzeug-Aussenanzeigesystem nach Anspruch 1 oder 2,
wobei die Anzeigesteuerungsvorrichtung ermöglicht, dass die Bildanzeigevorrichtung ein Anzeigebild, das den gleichen Blickpunkt für einen angezeigten Bereich wie der fotografierte Bereich aufweist, basierend auf einer Tatsache anzeigt, dass weder der erste Hindernissensor noch der zweite Hindernissensor ein Hindernis erfassen.

4. Fahrzeug-Aussenanzeigesystem nach einem der Ansprüche 1 bis 3,
wobei der fotografierte Bereich, an seinem äußeren Ende, ein Ende des Fahrzeugs beinhaltet, und
wobei die Anzeigesteuerungsvorrichtung, während der Verarbeitung das erste Teilbild so zuschneidet, dass dessen äußeres Ende das Ende des Fahrzeugs beinhaltet.

5. Fahrzeug-Aussenanzeigesystem nach einem der Ansprüche 1 bis 4,
wobei die Anzeigesteuerungsvorrichtung während der Verarbeitung eine äußere Form des ersten Teilbildes so zuschneidet, dass es ein Aspektverhältnis aufweist, das mit einem Aspektverhältnis einer äußeren Form des fotografierten Bildes identisch ist.

6. Fahrzeug-Aussenanzeigesystem nach einem der Ansprüche 1 bis 5,
wobei die Anzeigesteuerungsvorrichtung während der Verarbeitung das erste Teilbild so zuschneidet, dass ein horizontaler Mittelpunkt (11 bis 13) des ersten Erfassungsbereichs an einem horizontalen Mittelpunkt des ersten Teilbildes angeordnet ist.

7. Fahrzeug-Aussenanzeigesystem nach einem der Ansprüche 1 bis 6,
wobei der erste Hindernissensor einen Abstand von dem Fahrzeug zu einem Hindernis in dem ersten Erfassungsbereich erfasst.

8. Fahrzeug-Aussenanzeigesystem nach Anspruch 7,
wobei die Anzeigesteuerungsvorrichtung während der Verarbeitung das erste Teilbild so zuschneidet, dass ein oberer Teil des ersten Teilbildes eine Position in dem fotografierten Bild beinhaltet, wobei die Position einem durch den ersten Hindernissensor erfassten Abstand von dem Fahrzeug entspricht.

9. Fahrzeug-Aussenanzeigesystem nach Anspruch 7 oder 8,
wobei die Anzeigesteuerungsvorrichtung während der Verarbeitung das verarbeitete Bild erzeugt, indem das erste zugeschnittene Teilbilds gemäß einem Verfahren verarbeitet wird, das von einem durch den ersten Hindernissensor erfassten Abstand von dem Fahrzeug abhängig ist.

10. Fahrzeug-Aussenanzeigesystem nach Anspruch 9,
wobei die Anzeigesteuerungsvorrichtung während der Verarbeitung das verarbeitete Bild erzeugt, indem das erste zugeschnittene Teilbild in eine Vogelperspektive umgewandelt wird, und einen Abwärtsrichtungswinkel in der Vogelperspektive vergrößert, wenn ein durch den ersten Hindernissensor erfasster Abstand von dem Fahrzeug abnimmt.

11. Fahrzeug-Aussenanzeigesystem nach einem der Ansprüche 1 bis 9,
wobei die Anzeigesteuerungsvorrichtung während der Verarbeitung das verarbeitete Bild erzeugt, indem ein drittes Teilbild, das den ersten und den zweiten Erfassungsbereich von dem fotografierten Bild beinhaltet, basierend auf einer Tatsache zugeschnitten wird, dass der zweite Hindernissensor ein Hindernis gleichzeitig mit der Erfassung eines Hindernisses durch den ersten Hindernissensor erfasst.

12. Fahrzeug-Aussenanzeigesystem nach Anspruch 11,
wobei die Anzeigesteuerungsvorrichtung während der Verarbeitung das dritte Teilbild so zuschneidet, dass dessen horizontaler Mittelpunkt von einem horizontalen Mittelpunkt (11 bis 4) des ersten Erfassungsbereichs und einem horizontalen Mittelpunkt (11 bis 14) des zweiten Erfassungsbereichs horizontal gleichmäßig beabstandet angeordnet ist.

13. Fahrzeug-Aussenanzeigesystem nach Anspruch 11 oder 12,
wobei der erste Hindernissensor einen Abstand von dem Fahrzeug zu einem Hindernis in dem ersten Erfassungsbereich erfasst,
wobei der zweite Hindernissensor einen Abstand von dem Fahrzeug zu einem Hindernis in dem zweiten Erfassungsbereichs erfasst, und
wobei die Anzeigesteuerungsvorrichtung während der Verarbeitung das dritte Teilbild so zuschneidet, dass seine obere Hälfte eine Position in dem fotografierten Bild beinhaltet, wobei die Position einem jeweils kürzeren von (i) einem durch den erste Hindernissensor erfassten Abstand von dem Fahrzeug und (ii) einem durch den zweiten Hindernissensor erfassten Abstand von dem Fahrzeug entspricht.

## Revendications

1. Système d'affichage de l'extérieur d'un véhicule conçu pour un véhicule, le système comprenant :
un appareil photo (5a) qui prend en photo une zone photographique (20) à l'extérieur du véhicule et qui délivre en sortie une image photographiée en résultat de la photographie ;
un premier capteur d'obstacle (1 à 4) qui détecte un obstacle dans une première zone de détection (21, 22, 23, 24) comprise dans la zone photographique ;
un deuxième capteur d'obstacle (1 à 4) qui détecte un obstacle dans une deuxième zone de détection (21, 22, 23, 24) comprise dans la zone photographique, et qui est différente de la première zone de détection ;
un appareil d'affichage d'image (7) qui affiche une image ; et
un appareil de commande d'affichage (5b, 6) qui applique un processus à l'image photographiée délivrée en sortie par l'appareil photo générant ainsi une image traitée après le processus et affichant l'image traitée sur l'appareil d'affichage d'image (7), **caractérisé en ce que**
(i) si le premier capteur d'obstacle détecte un obstacle dans la première zone de détection, l'appareil de commande d'affichage applique le processus destiné à générer une image traitée par coupure, à partir de l'image photographiée, d'une première image partielle représentant la première zone de détection, affichant ainsi l'image traitée générée comme image d'affichage sur l'appareil d'affichage d'image ; ou
(ii) si le deuxième capteur d'obstacle détecte un obstacle dans la deuxième zone de détection, l'appareil de commande d'affichage applique le processus destiné à générer une image traitée par coupure, à partir de l'image photographiée, d'une deuxième image partielle représentant la deuxième zone de détection, affichant ainsi l'image traitée générée comme image d'affichage sur l'appareil d'affichage d'image, la deuxième image partielle étant différent de la première image partielle.

2. Système d'affichage de l'extérieur d'un véhicule selon la revendication 1,
dans lequel un angle de champ horizontal de la zone photographique est supérieur ou égal à 120 degrés.

3. Système d'affichage de l'extérieur d'un véhicule selon la revendication 1 ou 2,
dans lequel l'appareil de commande d'affichage permet à l'appareil d'affichage d'image d'afficher une image d'affichage ayant un même point de vue pour une plage affichée que l'image photographiée sur la base du fait que ni le premier capteur d'obstacle ni le deuxième capteur d'obstacle ne détecte un obstacle.

4. Système d'affichage de l'extérieur d'un véhicule selon l'une quelconque des revendications 1 à 3, dans lequel la zone photographique contient, à son extrémité périphérique, une extrémité du véhicule, et
dans lequel l'appareil de commande d'affichage, au cours du processus, coupe la première image partielle de telle sorte que son extrémité périphérique contienne l'extrémité du véhicule.

5. Système d'affichage de l'extérieur d'un véhicule selon l'une quelconque des revendications 1 à 4, dans lequel l'appareil de commande d'affichage, au cours du processus, coupe une forme externe de la première image partielle de manière à avoir un rapport d'aspect identique à un rapport d'aspect de la forme externe de l'image photographiée.

6. Système d'affichage de l'extérieur d'un véhicule selon l'une quelconque des revendications 1 à 5, dans lequel l'appareil de commande d'affichage, au cours du processus, coupe la première image partielle de sorte qu'un centre horizontale (11 à 13) de la première zone de détection se situe à un centre horizontal de la première image partielle.

7. Système d'affichage de l'extérieur d'un véhicule selon l'une quelconque des revendications 1 à 6, dans lequel le premier capteur d'obstacle détecte une distance entre le véhicule et un obstacle dans la première zone de détection.

8. Système d'affichage de l'extérieur d'un véhicule selon la revendication 7,
dans lequel l'appareil de commande d'affichage, au cours du processus, coupe la première image partielle de sorte qu'une partie supérieure de la première image partielle contienne une position dans l'image photographiée, la position correspondant à une distance détectée par le premier capteur d'obstacle par rapport au véhicule.

9. Système d'affichage de l'extérieur d'un véhicule selon la revendication 7 ou 8,
dans lequel l'appareil de commande d'affichage, au cours du processus, génère l'image traitée en traitant la première image partielle coupée en conformité avec un procédé qui varie avec une distance détectée par le premier capteur d'obstacle par rapport au véhicule.

10. Système d'affichage de l'extérieur d'un véhicule selon la revendication 9,
dans lequel l'appareil de commande d'affichage, au cours du processus, génère l'image traitée en transformant la première image partielle coupée en une vue à vol d'oiseau et augmente un angle de direction vers le bas dans la vue à vol d'oiseau à mesure qu'une distance détectée par le premier capteur d'obstacle par rapport au véhicule diminue.

11. Système d'affichage de l'extérieur d'un véhicule selon l'une quelconque des revendications 1 à 9,
dans lequel l'appareil de commande d'affichage, au cours du processus, génère l'image traitée par coupure d'une troisième image partielle contenant les première et deuxième zones de détection de l'image photographiée sur la base du fait que le deuxième capteur d'obstacle détecte un obstacle simultanément lorsque le premier capteur d'obstacle détecte un obstacle.

12. Système d'affichage de l'extérieur d'un véhicule selon la revendication 11,
dans lequel l'appareil de commande d'affichage, au cours du processus, coupe la troisième image partielle de sorte que son centre horizontal se situe horizontalement à égale distance d'un centre horizontale (11 à 14) de la première zone de détection et d'un centre horizontal (11 à 14) de la deuxième zone de détection.

13. Système d'affichage de l'extérieur d'un véhicule selon la revendication 11 ou 12,
dans lequel le premier capteur d'obstacle détecte une distance entre le véhicule et un obstacle dans la première zone de détection,
dans lequel le deuxième capteur d'obstacle détecte une à distance entre le véhicule et un obstacle dans la deuxième zone de détection, et
dans lequel l'appareil de commande d'affichage, au cours du processus, coupe la troisième image partielle de sorte que sa moitié supérieure contienne une position dans l'image photographiée, la position correspondant à une distance plus courte parmi (i) une distance détectée par le premier capteur d'obstacle par rapport au véhicule et (ii) une distance détectée par le deuxième capteur d'obstacle par rapport au véhicule.
